# EUROPÄISCHE PATENTSCHRIFT

(11) **EP 1 481 851 B1**
(45) Veröffentlichungstag und Bekanntmachung des Hinweises auf die Patenterteilung: **18.10.2006**
(21) Anmeldenummer: 04011467.0
(22) Anmeldetag: 10.05.2004
(51) Int. Cl.: B60R 5/00

(54) **Fahrzeugrücksitz mit einem von einer Durchladeöffnung in der Rücksitzlehne abnehmbaren Polsterelement**
Vehicle backseat with removable padding element in the loading opening of the backrest of the backseat.
Siège arrière de véhicule avec un élément de rembourrage amovible de l'ouverture de chargement du dossier du siège arrière.

(30) Priorität: 26.05.2003 DE 10323576
(43) Veröffentlichungstag der Anmeldung: 01.12.2004
(73) Patentinhaber: Bayerische Motoren Werke Aktiengesellschaft, 80809 München (DE)
(72) Erfinder: Rank, Ute, 82515 Wolfratshausen (DE); Graber, Ulrich, 85307 Paunzhausen (DE); Leneis, Thomas, 85669 Reithofen (DE); Schwingenschlögel, Stefan, 80807 München (DE)

(56) Entgegenhaltungen:
- EP-A- 0 940 289
- DE-A- 10 215 093
- DE-A- 19 901 280
- DE-U- 20 104 831

## Beschreibung

Die Erfindung betrifft einen Fahrzeugrücksitz mit einem von einer Durchladeöffnung in der Rücksitzlehne abnehmbaren Polsterelement, mit den im Oberbegriff des Patentanspruches 1 angegebenen Merkmalen.

Ein derartiger Fahrzeugrücksitz ist bei BMW Cabrio-Fahrzeugen der aktuellen Dreier Baureihe verwendet, der im unteren Mittelbereich einer zwei Rücksitzen zugeordneten gemeinsamen Rücksitzlehne eine Durchladeöffnung bildet, die im vorderen Bereich von einem Polsterelement zu verschließen ist. Zur Befestigung des Polsterelements in der Durchladeöffnung ist das Polsterelement auf einen im vorderen unteren Bereich der Durchladeöffnung nach oben abstehenden Bolzen aufsteckbar und im vorderen oberen Bereich der Durchladeöffnung über eine manuell lösbare Rasteinrichtung zu arretieren. Hinter dem Polsterelement kann ein Skisack angeordnet sein, der nach dem Entfernen des Polsterelements aus der Durchladeöffnung nach vorne in den Fahrgastraum zu entfalten ist. Gegenstände wie Skier können dann von einem hinteren Gepäckraum her durch die Durchladeöffnung hindurch in den nach vorne entfalteten Skisack eingesteckt und im Fahrzeug mitgeführt werden. Das in diesem Fall nicht benötigte lose Polsterelement kann bei einer Mitnahme im Fahrzeug insbesondere den Fahrer störende Bewegungen ausführen und bei geöffnetem Verdeck eventuell aus dem Fahrzeug fallen. Wird das Polsterelement außerhalb des Fahrzeugs beispielsweise im Heimbereich abgelegt, kann das Polsterelement leichter verschmutzt und/oder eventuell nicht sofort aufgefunden werden.

Der Erfindung liegt die Aufgabe zu Grunde, einen Fahrzeugrücksitz mit den Merkmalen im Oberbegriff des Patentanspruches 1 anzugeben, bei dem das im Fahrzeug mitgeführte Polsterelement mit einfachen Mitteln ausreichend festgehalten ist.

Diese Aufgabe ist durch die im Patentanspruch 1 angegebenen Merkmale gelöst. Vorteilhafte Ausgestaltungen der Erfindung sind den Unteransprüchen entnehmbar.

Die lösbare oder unlösbare Befestigung des Polsterelements an der Rücksitzlehne über einen wenigstens bereichsweise biegsamen Verbindungsstreifen kann in beliebiger Weise mit einfachen Mitteln erfolgen, die das Polsterelement auch bei einem Unfall ausreichend festhalten. Der Verbindungsstreifen ermöglicht zumindest näherungsweise eine Schwenkbewegung des Polsterelements aus der Durchladeöffnung, ohne dass hierfür an der Rücksitzlehne oder an dem Sitzteil eine Schwenkachse auszubilden ist, die einen entsprechenden Bauraum erfordert. Der Fahrzeugrücksitz ist kostengünstig zu fertigen und ermöglicht eine kompakte Bauweise seiner Rücksitzlehne. Bei einer lösbaren Verbindung des Verbindungsstreifens mit der Rücksitzlehne oder dem Sitzteil bzw. mit dem Polsterelement kann das Polsterelement jederzeit abgenommen und an einem beliebigen Ort abgelegt werden.

Ein Ausführungsbeispiel der Erfindung wird anhand einer Zeichnung näher erläutert. Es zeigen
- Fig. 1: einen vereinfachten Längsschnitt durch den Fahrzeugrücksitz bei von dem Polsterelement verschlossener Durchladeöffnung,
- Fig. 2: eine Figur 1 entsprechende Ansicht, in der das Polsterelement von der Durchladeöffnung weg geschwenkt und auf dem Sitzteil des Fahrzeugrücksitzes abgelegt ist und
- Fig. 3: einen Längsschnitt durch die Verbindungsstelle des Verbindungsstreifens an der Rücksitzlehne.

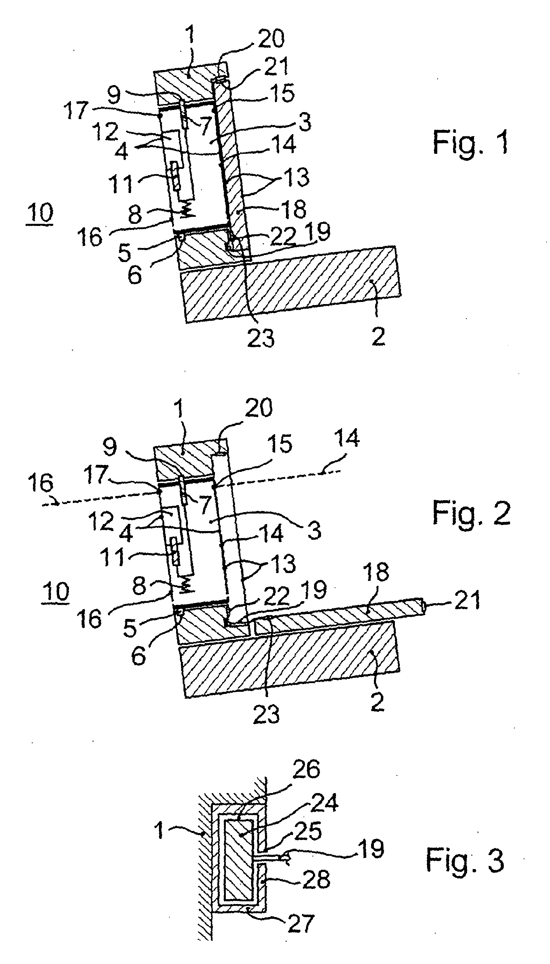

Der in Fig. 1 in einem Längsschnitt dargestellte Fahrzeugrücksitz ist bei einem Kraftfahrzeug mit Fahrzeugrücksitzen als Mittelsitz der Fahrzeugrücksitze verwendet und weist eine Rücksitzlehne 1 und ein Sitzteil 2 auf, an dem die Rücksitzlehne 1 an ihrem unteren Bereich um eine Fahrzeugquerachse schwenkbar befestigt ist. Die Rücksitzlehne 1 erstreckt sich in Fahrzeugquerrichtung so weit nach außen, dass sie zusätzlich die Rückenlehne eines seitlichen Fahrzeugsitzes bildet. Auf der anderen Seite ist eine weitere, nicht dargestellte Rückenlehne vorgesehen, die einem anderen seitlichen Fahrzeugsitz zugeordnet ist. Das Breitenverhältnis der dem dargestellten Fahrzeugrücksitz zugeordneten Rücksitzlehne 1 zu der Rückenlehne des anderen seitlichen Fahrzeugsitzes beträgt etwa 60 zu 40. Die Rücksitzlehne 1 und die seitlich daneben befindliche Rückenlehne sind unabhängig voneinander aus einer aufrechten Normallage nach vorne unten in eine etwa horizontale Beladestellung schwenkbar. Im mittleren bis unteren Bereich der Rücksitzlehne 1 des dargestellten Mittelsitzes ist eine Durchladeöffnung 3 ausgebildet, in dessen hinterem Bereich eine Skisackkassette 4 lösbar befestigt ist, in der sich ein nicht dargestellter, zusammengefalteter Skisack befindet. Zur Fixierung der Skisackkassette 4 in der Durchladeöffnung 3 stehen beispielsweise,vöm hinteren Bodenbereich der Skisackkassette 4 zwei seitlich gegenüberliegend angeordnete Laschen 5 nach unten ab und greifen in entsprechende Vertiefungen 6 in der Rücksitzlehne 1 ein. Von der Oberseite der Skisackkassette 4 steht ein höhenverstellbarer Riegel 7 nach oben ab, der von einer Feder 8 nach oben belastet ist und in eine Rastausnehmung 9 in der Rücksitzlehne 1 eingreift. Soll die Skisackkassette 4 aus der Durchladeöffnung 3 entfernt werden, so ist vom hinteren Gepäckraum 10 her eine an der Skisackkassette 4 verstellbar angeordnete Betätigungstaste 11, die in eine rückwärtige Ausnehmung 12 in der Skisackkassette 4 ragt, nach unten zu drücken, damit der mit der Betätigungstaste 11 verbundene oder zusammenwirkende Riegel 7 nach unten aus der Rastausnehmung 9 heraus verstellt wird. Anschließend kann die Skisackkassette 4 beispielsweise nach hinten aus der Durchladeöffnung 3 entfernt werden.

Die Durchladeöffnung 3 ist an ihrem vorderen Bereich jeweils seitlich und oben sowie unten von einem Bereich der Rücksitzlehne 1 begrenzt. Im vorderen Bereich der Durchladeöffnung 3 ist eine radial erweiterte Vertiefung 13 gebildet, die sich in Fahrzeuglängsrichtung von der Anlagefläche der Rücksitzlehne 1 etwa bis zu einem vorderen Deckel 14 der Skisackkassette 4 erstreckt, der um eine obere Querachse 15 nach vorne oben in die in Figur 2 durch eine unterbrochene Linie dargestellte Offenlage schwenkbar ist. Die Vertiefung 13 ist in Umfangsrichtung an die etwa rechteckige Form des Polsterelements 18 angepasst. An der Rückseite der Skisackkassette 4 ist ein hinterer Deckel 16 um eine obere Querachse 17 nach hinten oben in die in Figur 2 durch eine unterbrochene Linie angegebene Offenlage schwenkbar. In Figur 1 ist in die Vertiefung 13 ein Polsterelement 18 eingebracht, das über einen zumindest bereichsweise biegsamen Verbindungsstreifen 19 mit der Rücksitzlehne 1 verbunden ist. Der Verbindungsstreifen 19 ist beispielsweise ein Stoff- oder Gewebestreifen oder durch ein flächenhaftes Teil, beispielsweise eine Folie, gebildet. Der Verbindungsstreifen 19 kann auch durch ein mehr oder weniger steifes Teil, beispielsweise ein Kunststoffteil gebildet sein, das durch ein Filmscharnier oder dergleichen einen biegsamen Bereich bildet, der näherungsweise eine Schwenkbewegung des Polsterelements ermöglicht. Bei in der aufrechten Normallage befindlicher Rücksitzlehne 1 und in die Durchladeöffnung 3 zumindest teilweise eingebrachtem Polsterelement 18 ist der Verbindungsstreifen 19 am unteren Randbereich des Polsterelements 18 befestigt. An seinem von dem Polsterelement 18 abgewandten Rand ist der Verbindungsstreifen 19 lösbar mit der Rücksitzlehne 1 bzw. einem daran befestigten Rückenlehnenteil verbunden.

In der in Figur 1 dargestellten Schließlage des Polsterelements 18 ist der Verbindungsstreifen 19 in einem zumindest kleinen Freiraum in der Durchladeöffnung 3 beispielsweise unregelmäßig zusammengefaltet angeordnet. Zur Fixierung des Polsterelements 18 im vorderen oberen Bereich der Durchladeöffnung 3, ist im oberen Bereich der Vertiefung 13 ein Klettband 20 oder Flauschband angeordnet und an dem gegenüberliegenden Wandbereich des Polsterelements 18 ein Flauschband 21 oder Klettband angeordnet, die nach dem Einbringen des Polsterelements 18 in die Vertiefung 13 miteinander verhaken und erst durch eine entsprechende Krafteinwirkung voneinander lösbar sind. Damit beim Einbringen des Polsterelements 18 in die Vertiefung 13 das Klettband 20 nicht vorzeitig an dem Flauschband 21 verhakt und dadurch das Einbringen des Polsterelements 18 in die Vertiefung 13 erschwert, ist dabei das Polsterelement 18 an seinem oberen Bereich kurzzeitig elastisch nach unten zu drücken. Zusätzlich ist im unteren Bereich des Bodens der Vertiefung 13 ein Klettband 22 oder Flauschband sowie an der gegenüber liegenden Fläche des Polsterelements 18 ein Flauschband 23 oder Klettband angeordnet, die in der Schließlage des Polsterelements 18 miteinander verhaken und dadurch das Polsterelement 18 zusätzlich festhalten.

Wie in Figur 2 dargestellt kann das Polsterelement 18 entweder durch eine entsprechende Krafteinwirkung oder nach dem separaten Lösen der Verhakungen der Klettbänder 20, 22 mit den zugeordneten Flauschbändern 21, 23 in einem von der Größe des Verbindungsstreifens 19 abhängigen Maß von der Durchladeöffnung 3 etwas entfernt und näherungsweise durch eine Schwenkbewegung vor der Durchladeöffnung 3 auf dem Sitzteil 2 abgelegt werden. Anschließend können der vordere und hinteren Deckel 14 bzw. 16 der Skisackkassette 4 in die jeweils durch eine unterbrochene Linie dargestellte Offenlage geschwenkt werden, in der die Deckel 14, 16 beispielsweise von einer Rasteinrichtung festgehalten sind. Der in der Skisackkassette 4 befindliche, nicht dargestellte Skisack kann nun sofort oder erst beim Einbringen von Gegenständen wie Skier in den Skisack von hinten nach vorne entfaltet werden. Auf diese Weise können auch nasse Gegenstände im Fahrzeug mitgeführt werden, ohne dass diese den Fahrgastraum einnässen oder verschmutzen können.

In Figur 3 ist die Verbindungsstelle zwischen dem Verbindungsstreifen 19 und der Rücksitzlehne 1 vergrößert dargestellt. In der Figur ist erkennbar, dass der Verbindungsstreifen 19 an seinem von dem Polsterelement abgewandten Rand mit einer Verbindungsleiste 24 verbunden ist, die nach dem Umlegen der in der Breite schmäleren Rücksitzlehne in eine etwa horizontale Lage seitlich in eine an einem Längsrand 25 offene Nutausnehmung 26 an der Rücksitzlehne 1 einsteckbar ist und dabei der Verbindungsstreifen 19 den offenen Längsrand 25 durchsetzt. Die Nutausnehmung 26 ist beispielsweise durch ein separates C-Profil 27 gebildet, das an der Rücksitzlehne 1 in beliebiger Weise zu befestigen ist. Der Längsrand 25 ist in einem die Nutausnehmung 26 vorne begrenzenden Wandbereich 28 des C-Profils 27 etwa in Höhenmitte der Nutausnehmung 26 ausgebildet.

Die in den Figuren 1 und 2 dargestellte Halteeinrichtung zur Fixierung der Skisackkassette 4 in der Durchladeöffnung 3 ist lediglich vereinfacht und idealisiert dargestellt. Die Halteeinrichtung und die Betätigungstaste 11 sowie die Ausnehmung 12 sind so angeordnet, dass zumindest nach dem Hochschwenken der Deckel 14 und 16 die Durchladeöffnung 3 weitgehend frei gegeben ist. Die Halteeinrichtung kann auch eine Betätigungstaste oder dergleichen aufweisen, die nach dem Entfernen des Polsterelements aus der Durchladeöffnung von vorne zu betätigen ist. Nach dem Lösen der Halteeinrichtung kann die Skisackkassette nach vorne oder nach hinten aus der Durchladeöffnung entfernt werden. Bei dem Ausführungsbeispiel ist die das Polsterelement aufnehmende Vertiefung gegenüber dem anderen Bereich der Durchladeöffnung allseitig radial erweitert. Ebenso kann die Vertiefung nicht oder an wenigstens einem Randbereich radial erweitert sein. Unabhängig davon, ob die Vertiefung an einem Randbereich radial erweitert ist, kann der Boden der Vertiefung durch eine vordere Wand oder einen vorderen Deckel der Skisackkassette oder eines anderen, hinter dem Polsterelement in die Durchladeöffnung eingesetzten Bauteiles gebildet sein. Die Skisackkassette kann auch entfallen oder durch ein anderes Bauteil bzw. ein Modul wie eine Kühlbox oder ein Ablegesystem ersetzt sein. Der Fahrzeugrücksitz ist vielseitig beispielsweise als mittlerer Rücksitz zu verwenden. Bei nach vorne auf dem Sitzteil abgelegtem Polsterelement kann das Polsterelement ersatzweise als Armlehne oder als Stütze für durch die Durchladeöffnung nach vorne in den Fahrgastraum ragende Gegenstände genutzt werden. Ebenso kann das Polsterelement auch seitlich oder nach oben von der Durchladeöffnung weg näherungsweise schwenkbar sein. Durch die Verbindung des Polsterelements mit der Rücksitzlehne über einen Verbindungsstreifen kann das Polsterelement beispielsweise bei einem Unfall nicht allzu weit von der Durchladeöffnung entfernt werden bzw. aus dem geöffneten Fahrzeug fallen und eventuell Personen gefährden. Der Verbindungsstreifen kann auch nicht mit der Rücksitzlehne sondern mit dem Sitzteil oder dem Polsterelement lösbar oder unlösbar verbunden sein. Dies kann direkt oder unter Zwischenschaltung eines weiteren, beispielsweise mit der Verbindungsleiste vergleichbaren Bauteiles erfolgen, die keine C-Form aufweisen muss. Die Verbindung des Verbindungsstreifens mit der Rücksitzlehne bzw. dem Sitzteil oder dem Polsterelement kann auf beliebige Weise lösbar oder unlösbar erfolgen. Bei einer lösbaren Verbindung kann das Polsterelement von der Rücksitzlehne bzw. vom Sitzteil abgenommen und an einem beliebigen Platz abgelegt werden. Ist das Fahrzeug ohne eine Skisackkassette oder ein anderes, an Stelle der Skisackkassette verwendbares Bauteil oder Modul ausgerüstet, so kann das kleine Polsterelement durch ein größeres Polsterelement austauschbar oder ersetzt sein, das in die Durchladeöffnung einzubringen und wie das beschriebene kleinere Polsterelement über einen Verbindungsstreifen und eventuell weitere Halteelemente wie einen mit einem Flauschband zusammenwirkenden Klettverschluss ausreichend fest zu halten ist. Ein hinter dem Polsterelement in die Durchladeöffnung eingesetztes Bauteil oder Modul kann sich bis zur Rückseite der Rücksitzlehne oder darüber hinaus nach hinten erstrecken. In den Figuren ist nicht erkennbar, dass bei dem Ausführungsbeispiel die Durchtrittsöffnung im Bereich des Bodens der Vertiefung und an der Rückseite jeweils mit einem Rahmen versehen ist, wobei die beiden Rahmenteile jeweils an einem ausreichend festen Teil der Rücksitzlehne befestigt sind. Bei dem Ausführungsbeispiel weist die Skisackkassette einen vorderen und einen hinteren Deckel auf, die jeweils um eine obere Querachse nach oben schwenkbar sind. Ebenso können diese Deckel auch um eine untere oder seitliche Schwenkachse schwenkbar angeordnet oder separat entfernbar sein. In oder an der Oberseite des auf dem Sitzteil abgelegten Polsterelements kann eine Aufnahme oder Ablage oder Halterung für Gegenstände ausgebildet oder angebracht sein. Der Verbindungsstreifen kann lösbar oder unlösbar mit einer Verbindungsleiste verbunden sein, die jeweils um lösbar oder unlösbar einerseits mit der Rücksitzlehne oder dem Sitzteil und/oder andererseits mit dem Polsterelement verbunden oder zu verbinden ist. Die Rücksitzlehne und/oder eine eventuell neben der Rücksitzlehne befindliche Rückenlehne können feststehend oder schwenkbar angeordnet sein.

## Patentansprüche

1. Fahrzeugrücksitz mit einem von einer Durchladeöffnung in der Rücksitzlehne abnehmbaren Polsterelement, **dadurch gekennzeichnet, dass** das Polsterelement (18) an einem Randbereich lösbar oder unlösbar mit einem Verbindungsstreifen (19) verbunden ist, der an seinem von dem Polsterelement (18) abgewandten Endbereich lösbar oder unlösbar mit der Rücksitzlehne (1) oder dem Sitzteil des Fahrzeugsrücksitzes verbunden ist und der Verbindungsstreifen (19) zumindest tereichsweise biegsam ausgebildet ist.

2. Fahrzeugrücksitz nach Anspruch 1, **dadurch gekennzeichnet, dass** der Verbindungsstreifen (19) lösbar oder unlösbar mit einer Verbindungsleiste (24) verbunden ist, die lösbar oder unlösbar mit der Rücksitzlehne (1) oder dem Sitzteil und/oder dem Polsterelement verbunden oder zu verbinden ist.

3. Fahrzeugrücksitz nach Anspruch 2, **dadurch gekennzeichnet, dass** die Verbindungsleiste (24) seitlich in eine an einem Längsrand (25) offene Nutausnehmung (26) an der Rücksitzlehne (1) oder an dem Sitzteil oder an dem Polsterelement einsteckbar ist und dabei der Verbindungsstreifen (19) den Längsrand (25) durchsetzt.

4. Fahrzeugrücksitz nach Anspruch 3, **dadurch gekennzeichnet, dass** der Längsrand (25) in einem Wandbereich (28) eines mit der Rücksitzlehne (1) oder dem Sitzteil oder dem Polsterelement verbundenen oder verbindbaren Teiles (C-Profil 27) ausgebildet ist.

5. Fahrzeugrücksitz nach einem der Ansprüche 1 bis 4, **dadurch gekennzeichnet, dass** in der aufrechten Normallage der Rücksitzlehne (1) bei in die Durchladeöffnung (3) zumindest teilweise eingebrachtem Polsterelement (18) der Verbindungsstreifen (19) am unteren Randbereich des Polsterelements (18) angeordnet ist.

6. Fahrzeugsitz nach einem der Ansprüche 1 bis 5, **dadurch gekennzeichnet, dass** die Durchladeöffnung (3) an ihrem vorderen Bereich jeweils seitlich und oben oder zusätzlich unten von einem Bereich der Rücksitzlehne (1) begrenzt ist.

7. Fahrzeugsitz nach einem der Ansprüche 1 bis 6, **dadurch gekennzeichnet, dass** das Polsterelement (18) bis zum Boden einer mit der Durchladeöffnung (3) etwa fluchtenden, gegenüber der Durchladeöffnung (3) eventuell radial erweiterten Vertiefung (13) in der Anlagefläche der Rücksitzlehne (1) einzubringen ist, wobei die Vertiefung (13) in ihrer Umfangsfläche an die Form des Polsterelements (18) angepasst ist.

8. Fahrzeugsitz nach einem der Ansprüche 1 bis 7, **dadurch gekennzeichnet, dass** im vorderen oberen Bereich der Durchladeöffnung (3) ein Klettband (20) oder Flauschband und im oberen Bereich des vor die Durchladeöffnung (3) gebrachten Polsterelements (18) ein Flauschband (21) oder Klettband und/oder im unteren Bereich des Bodens der Vertiefung (13) ein Klettband (22) oder Flauschband sowie an der gegenüber liegenden Fläche des Polsterelements (18) ein Flauschband (23) oder Klettband angeordnet sind.

9. Fahrzeugrücksitz nach einem der Ansprüche 1 bis 8, **dadurch gekennzeichnet, dass** die Durchladeöffnung (3) in einer in Fahrzeugquerrichtung größeren Rücksitzlehne (1) neben einer in Fahrzeugquerrichtung kleineren Rücksitzlehne ausgebildet ist und die größere (1) und die kleinere Rücksitzlehne unabhängig voneinander aus einer aufrechten Normallage nach vorne unten in eine etwa horizontale Beladestellung schwenkbar sind.

10. Fahrzeugrücksitz nach Anspruch 9, **dadurch gekennzeichnet, dass** die in Fahrzeugquerrichtung größere Rücksitzlehne (1) im Bereich der Durchladeöffnung (3) eine Rücksitzlehne (1) eines mittleren Fahrzeugsitzes und daneben eine Rückenlehne eines seitlichen Fahrzeugsitzes bildet.

11. Fahrzeugrücksitz nach einem der Ansprüche 1 bis 10, **dadurch gekennzeichnet, dass** in den Raum zwischen dem Polsterelement (18) und dem hinteren Bereich der Durchladeöffnung (3) eine Skisackkassette (4) mit einem zusammengefalteten Skisack oder ein Bauteil oder Modul einzubringen und an der Rücksitzlehne (1) lösbar zu befestigen ist und gegebenenfalls der Skisack nach dem Entfernen des Polsterelements (18) und eventuell nach dem Öffnen von vorne und hinten die Skisackkassette (4) begrenzenden Deckeln (14, 16) nach vorne in den Fahrgastraum des Fahrzeugs zu entfalten ist und von hinten Gegenstände zumindest teilweise in den Skisack einzubringen sind.

12. Fahrzeugrücksitz nach einem der Ansprüche 1 bis 11, **dadurch gekennzeichnet, dass** die vordere Wand der geschlossenen Skisackkassette (4) oder ein vorderer Deckel (14) der Skisackkassette (4) oder ein in die Durchladeöffnung eingebrachtes Bauteil oder Modul den Boden der Vertiefung (13) bildet.

## Claims

1. A back seat in a vehicle comprising an upholstery element removable from the back rest through a loading opening, **characterised in that** an edge region of the upholstery element (18) is releasably or non-releasably connected by a connecting strip (19) which at its end remote from the upholstery element (18) is releasably or non-releasably connected to the back (1) or to the seat part of the back seat, and the connecting strip (19) is flexible, at least in parts.

2. A seat according to claim 1, **characterised in that** the connecting strip (19) is releasably or non-releasably connected to a bar (24) which is releasably or non-releasably connected or connectable to the back rest (1) or the seat part and/or the upholstery element.

3. A seat according to claim 2, **characterised in that** the connecting strip (24) is insertable sideways into a groove or recess (26), open at a longitudinal edge (25), on the back rest (1) or on the seat part or on the upholstery element, when the connecting strip (19) extends through the longitudinal edge (25).

4. A seat according to claim 3, **characterised in that** the longitudinal edge (25) is formed in a wall region (28) of a part (C-profile 27) connected or connectable to the back rest (1) or the seat part or the upholstery element.

5. A seat according to any of claims 1 to 4, **characterised in that** when the back rest (1) is in the upright or normal position and the upholstery element (18) is at least partly inserted into the loading opening (3), the connecting strip (19) is disposed on the bottom edge region of the upholstery element (18).

6. A seat according to any of claims 1 to 5, **characterised in that** the front region of the loading opening (3) is bounded at the side and top or additionally at the bottom by a respective region of the back rest (1).

7. A seat according to any of claims 1 to 6, **characterised in that** the upholstery element (18) is insertable into the contact surface of the back rest (1) down to the bottom of a recess (13) approximately in line with the loading opening (3) and radially widened if required relative to the loading opening (3), wherein the peripheral surface of the recess (13) is adapted to the shape of the upholstery element (18).

8. A seat according to any of claims 1 to 7, **characterised in that** a hook and loop strip (20) or a velvet strip is disposed in the front top region of the loading opening (3), a velvet strip or a hook and loop strip is disposed in the top region of the upholstery element (18) brought in front of the loading opening (3), and/or a hook and loop strip (22) or a velvet strip is disposed in the narrow region of the bottom of the recess (13) and a velvet strip (23) or a hook and loop strip is disposed on the opposite surface of the upholstery element (18).

9. A seat according to any of claims 1 to 8, **characterised in that** the loading opening (3) is formed in a back rest (1) relatively large in the transverse direction of the vehicle alongside a back rest relatively small in the transverse direction of the vehicle and the larger back rest (1) and the smaller back rest can be independently swung out of an upright normal position forwards and downwards into an approximately horizontal loading position.

10. A seat according to claim 9, **characterised in that** in the neighbourhood of the loading opening (3) the larger back rest (1) in the transverse direction of the vehicle forms a back rest (1) of a middle seat in the vehicle alongside a back rest of a side seat.

11. A seat according to any of claims 1 to 10, **characterised in that** a ski-bag holder (4) containing a folded ski bag or component or module is insertable into the space between the upholstery element (18) and the rear region of the loading opening (3) and can be releasably fastened to the back rest (1) and if required the ski bag, after removal of the upholstery element (18) and if required after opening covers (14, 16) bounding the front and rear of the ski-bag holder (4), is opened forwards into the passenger compartment of the vehicle and objects from behind can be inserted at least partly into the ski bag.

12. A seat according to any of claims 1 to 11, **characterised in that** the front wall of the ski-bag holder (4) when closed or a front cover (14) of the ski-bag holder (4) or a component or module inserted into the loading opening forms the bottom of the recess (13).

## Revendications

1. Siège arrière de véhicule avec un élément de rembourrage pouvant être retiré par une ouverture de chargement pratiquée dans le dossier,
**caractérisé en ce que**
l'élément de rembourrage (18), au niveau d'une zone en bordure, est relié de manière détachable ou non détachable à une bande de liaison elle-même reliée de manière détachable ou non détachable au dossier (1) du siège arrière ou à une partie de celui-ci au niveau de la zone d'extrémité opposée à l'élément de rembourrage (18), la bande de liaison (19) étant flexible au moins par endroits.

2. Siège arrière de véhicule selon la revendication 1,
**caractérisé en ce que**
la bande de liaison (19) est reliée, ou doit être reliée, de manière détachable ou non détachable à une barre de liaison (24) elle-même reliée de manière détachable ou non détachable au dossier (1) du siège arrière ou à une partie du siège et/ ou à l'élément de rembourrage.

3. Siège arrière de véhicule selon la revendication 2,
**caractérisé en ce que**
la barre de liaison (24) peut être emboîtée dans un évidement en forme de rainure (26) ouvert sur son bord longitudinal (25) au niveau du dossier (1) du siège arrière ou au niveau du siège ou au niveau de l'élément de rembourrage et la bande de liaison (19) traverse ainsi le bord longitudinal (25).

4. Siège arrière de véhicule selon la revendication 3,
**caractérisé en ce que**
le bord longitudinal (25) est réalisé dans une zone de paroi (28) d'un élément (Profil en C 27) relié ou pouvant être relié au dossier (1) de siège arrière ou au siège ou à l'élément de rembourrage.

5. Siège arrière de véhicule selon l'une des revendications 1 à 4,
**caractérisé en ce que**,
dans la position normale droite du dossier (1) de siège arrière, lorsque l'élément de rembourrage (18) est au moins partiellement introduit dans l'ouverture de chargement (3), la bande de liaison (19) est disposée au niveau de la zone en bordure inférieure de l'élément de rembourrage (18).

6. Siège de véhicule selon l'une des revendications 1 à 5,
**caractérisé en ce que**
l'ouverture de chargement (3) est, en sa partie avant, délimitée latéralement, et en haut, ou aussi en bas, par une zone du dossier (1) du siège arrière.

7. Siège de véhicule selon l'une des revendications 1 à 6,
**caractérisé en ce que**
l'élément de rembourrage (18) s'introduit dans la surface d'appui du dossier (1) de siège arrière jusqu'au fond d'un renfoncement à peu près aligné avec l'ouverture de chargement (3) et éventuellement élargi radialement par rapport à l'ouverture de chargement, la surface périphérique du renfoncement (13) étant adaptée à la forme de l'élément de rembourrage (18).

8. Siège de véhicule selon l'une des revendications 1 à 7,
**caractérisé en ce qu'**
on dispose un ruban à crochets (20) ou un ruban-velours dans la partie supérieure à l'avant de l'ouverture de chargement (3), et un ruban-velours (21) ou ruban à crochets dans la partie supérieure de l'élément de rembourrage (18) amené devant l'ouverture de chargement (3), et/ou un ruban à crochets (22) ou ruban-velours dans la partie inférieure du fond du renfoncement (13), ainsi qu'un ruban-velours (23) ou ruban à crochets à la surface opposée de l'élément de rembourrage (18).

9. Siège arrière de véhicule selon l'une des revendications 1 à 8,
**caractérisé en ce que**
l'ouverture de chargement (3) est réalisée dans un dossier (1) de siège arrière plus grand dans la direction transversale du véhicule à côté d'un dossier de siège arrière plus petit dans la direction transversale du véhicule, et le dossier de siège arrière plus grand (1) et celui plus petit peuvent pivoter indépendamment l'un de l'autre vers l'avant et vers le bas, à partir d'une position normale droite, jusque dans une position de chargement approximativement horizontale.

10. Siège arrière de véhicule selon la revendication 9,
**caractérisé en ce que**
le dossier (1) du siège arrière plus grand dans la direction transversale du véhicule forme, dans la zone de l'ouverture de chargement (3), un dossier (1) pour un siège au centre du véhicule et en outre un dossier d'un siège latéral du véhicule.

11. Siège arrière de véhicule selon l'une des revendications 1 à 10,
**caractérisé en ce que**,
dans l'espace ménagé entre l'élément de rembourrage (18) et la zone arrière de l'ouverture de chargement (3), une boîte pour sac à skis (4) avec un sac replié ou bien un composant ou un module peut être introduit(e) et être fixé(e) de manière détachable au dossier (1) du siège arrière et, le cas échéant, après avoir enlevé l'élément de rembourrage (18), le sac à skis peut être déployé et éventuellement, après ouverture par l'avant et l'arrière, les couvercles (14, 16) délimitant la boîte de sac à skis(4) peuvent être déployés vers l'avant dans l'habitacle du véhicule et des objets peuvent être introduits par l'arrière au moins partiellement dans le sac à skis.

12. Siège arrière de véhicule selon l'une des revendications 1 à 11,
**caractérisé en ce que**
la paroi avant de la boîte pour sac à skis (4) fermée ou bien un couvercle avant (14) de celle-ci ou encore un composant ou module introduit dans l'ouverture de chargement forme le fond du renfoncement (13).
